# FASCICULE DE BREVET EUROPEEN

(11) **EP 0 939 030 B1**
(45) Date de publication et mention de la délivrance du brevet: **18.08.2004**
(21) Numéro de dépôt: 99400336.6
(22) Date de dépôt: 11.02.1999
(51) Int. Cl.: B64D 37/06, B60K 15/03

(54) **Paroi pour structures aéronautiques**
Aussenwand für Flugzeugbauteile
Wall for aircraft structures

(30) Priorité: 26.02.1998 FR 9802349
(43) Date de publication de la demande: 01.09.1999
(73) Titulaire: SOCIETE D'ETUDES ET DE CONSTRUCTIONS AERO-NAVALES, F-92230 Gennevilliers (FR)
(72) Inventeur: Mabru, Thierry, 51420 Cernay les Reims (FR); Reis, Jean-Luc, 51420 Witry les Reims (FR)
(74) Mandataire: Coester, Jacques Charles

(56) Documents cités:
- US-A- 2 144 945
- US-A- 3 559 708
- US-A- 4 700 445
- US-A- 5 451 015
- PATENT ABSTRACTS OF JAPAN vol. 012, no. 459 (M-770), 2 décembre 1988 & JP 63 183815 A (HONDA MOTOR CO LTD), 29 juillet 1988

## Description

L'invention concerne une paroi métallique ou non métallique, notamment pour structures aéronautiques telles que des réservoirs étanches et un réservoir réalisé par une telle paroi. Le US-A-2144945 montre une paroi et un réservoir avec les caractéristiques du préambule de la revendication 1, resp. de la revendication 12.

On constate actuellement un besoin croissant, notamment pour la réalisation de réservoirs parallélépipédiques, particulièrement dans le domaine aéronautique, d'éléments de paroi ayant une raideur importante dans plusieurs directions différentes. Pour satisfaire à ces exigences, il est connu d'utiliser des tôles renforcées par des profilés, par exemple en forme d'un Ω, disposés parallèlement ou en configuration croisée.

Ces parois présentent l'inconvénient majeur que leur épaisseur est importante, ce qui diminue l'espace utile lorsqu'il s'agit de réservoirs construits par assemblage de telles parois et que celles-ci présentent quand même une résistance mécanique insuffisante, lorsqu'elles sont exposées à de fortes contraintes en raison de la discontinuité de leur moment d'inertie, occasionnée par l'alternance des profilés et de la surface de base seule.

La présente invention a pour but de proposer une paroi qui pallie les inconvénients des parois connues.

Pour atteindre ce but, la paroi selon l'invention comprend les caractéristique de la revendication 1.

Selon une caractéristique de l'invention, les zones de liaison sont réalisés par soudure par points, par ultrasons, collage, brasage, rivetage et analogues.

Selon une caractéristique de l'invention les bords de plaques sont reliés pour former des zones de fixation de la paroi à une structure de support.

Selon une autre caractéristique de l'invention, la rigidité de la paroi est variable par le choix du nombre et des écarts des zones de liaison et/ou le choix du degré de bombage des plaques.

Selon une autre caractéristique de l'invention, l'espace entre les parois est rempli d'un produit de propriétés spécifiques, tel qu'un produit thermiquement ou accoustiquement isolant ou ininflammable ou mécaniquement favorable.

Le procédé pour la réalisation d'une telle paroi est caractérisé en ce que le bombage des plaques entre les points de liaison est obtenu par injection entre les plaques d'un fluide sous pression.

Selon une autre caractéristique de l'invention, la liaison des plaques est réalisée notamment par soudage par points, ultrasons, collage, brasage, rivetage.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemples illustrant un mode de réalisation de l'invention et sur lesquels :
- la figure 1 montre un réservoir réalisé à partir de parois métalliques selon la présente invention ;
- la figure 2 est une vue en coupe d'une paroi selon l'invention avant l'opération de gonflage ;
- les figure 3a et 3b ont des vues similaires à la figure 2, mais montrent la paroi à l'état "gonflé" dans deux versions de réalisation ;
- la figure 4 montre des courbes illustrant la déformation d'une paroi selon l'invention et d'une paroi connue en fonction de la pression de déformation exercée sur la paroi ;
- les figures 5A, B et C illustrent une paroi selon l'invention respectivement en une vue en élévation et en coupe et le dispositif de mesure utilisé pour l'obtention de la courbe I représentée sur la figure 4 ;
- les figures 6A, B et C sont des vues similaires à celles de la figure 5, d'une paroi connue, pour l'obtention de la courbe II de la figure 4.

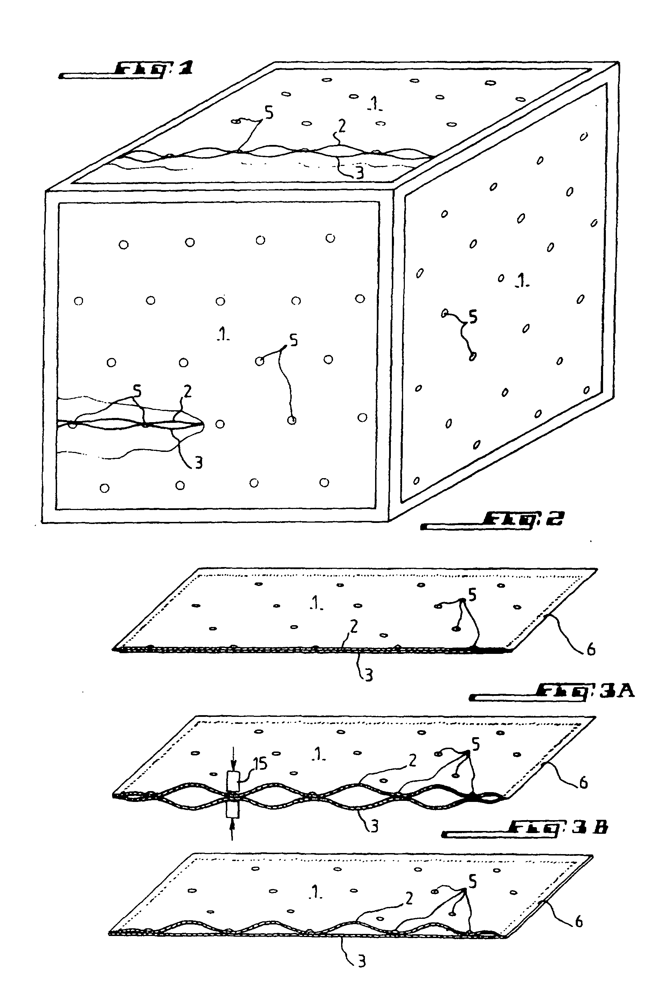

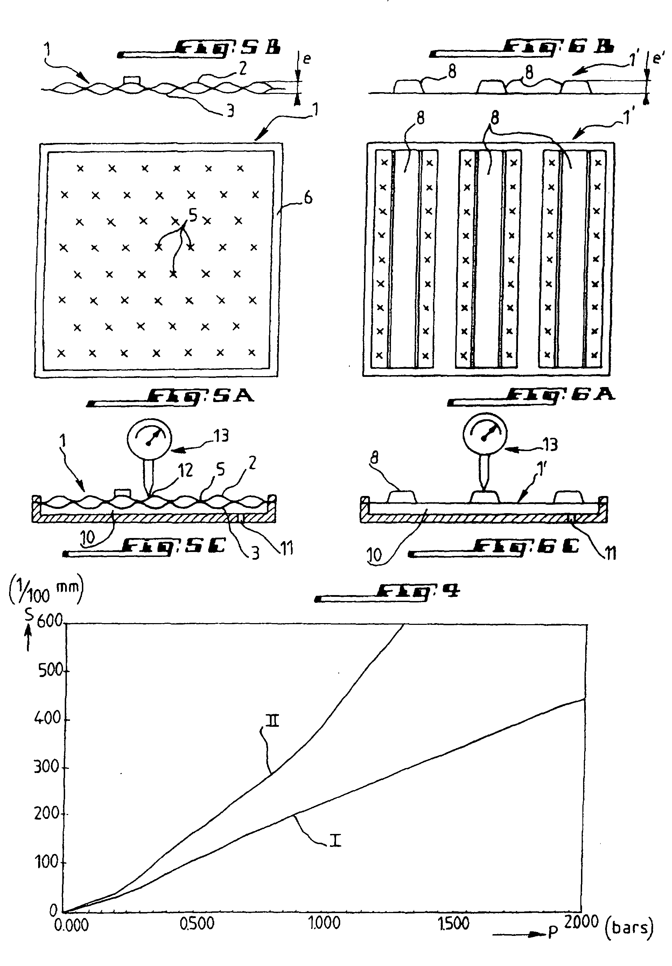

La figure 1 montre, à titre d'exemple, un réservoir parallélépipèdique réalisé par assemblage de parois 1 selon l'invention. Comme on le voit déjà sur ces figures et plus particulièrement sur les figures 2 et 3a et 3b, une paroi selon l'invention est réalisée par superposition de deux plaques, par exemple de tôle en alliage d'aluminium 2 et 3 reliées l'une à l'autre dans des zones de liaison 5, représentées sur les figures sous forme de points par exemple de soudure et dont les bords sont soudés de façon étanche de façon à obtenir des bords 6 qui permettent le montage des parois sur une structure de support. Puis, on déforme les plaques, avantageusement par injection d'un fluide, avantageusement d'un liquide, sous pression dans l'espace délimité entre les plaques de façon que les parties situées entre les zones de liaison 5 soient bombées. On obtient ainsi une structure de double paroi "alvéolée" ou "matelassée". Le taux de bombage, c'est-à-dire l'écart maximal des deux plaques 2 et 3 entre les points de liaison est variable par variation de la pression du fluide injecté et de l'outillage de formage utilisé. Bien entendu, la répartition et l'arrangement des zones de liaison sur la surface de la paroi composite sont également variables.

Les parois composites selon l'invention peuvent être réalisées sous forme de plaques planes ou gauchies. Il suffit à cette fin de placer les plaques superposées préformées, lors du "gonflage" dans une forme dont l'espace interne est courbe de façon correspondante et est délimité par des faces écartées l'une de l'autre d'une distance égale à l'épaisseur souhaitée de la paroi.

Comme le montre les figures 3A et 3B seulement l'une des deux plaques ou les deux peuvent être déformées et présenter des parties bombées.

La figure 4 illustre, à titre de comparaison, les propriétés mécaniques d'une paroi composite alvéolée selon l'invention telle que représentée schématiquement sur les figures 5A et 58 avec celles d'une paroi classique du type montré sur les figures 6A et 6B, c'est-à-dire constituée d'une plaque métallique sur laquelle sont rapportés des profilés en forme d'un Ω désigné par la référence 8.

La figure 4 montre les déformations des plaques en fonction de contraintes mécaniques exercées sur celles-ci. Les dispositifs de mesure utilisés à cette fin sont montrés sur les figures 5C et 6C. Ces dispositifs sont bien entendu identiques. La plaque selon l'invention porte la référence 1 (figure 5C) et la plaque classique la référence 1' (figure 6C). Dans ces dispositifs de mesure, les parois sont encastrées le long de leurs quatre côtés et une pression est exercée sur la surface de chaque paroi éprouvette 1, 1'. A cette fin, l'espace en dessous de la paroi est réalisé sous forme d'une chambre de pression 10 et du fluide sous pression est introduit dans cette chambre à travers une ouverture 11. On mesure alors le déplacement des parois à leur centre indiqué en 12 à l'aide d'un appareil de mesure schématiquement représenté en 13. Sur la figure 4, les valeurs S du déplacement sont reportées sur l'ordonnée et la pression P sur l'abscisse. La courbe I représente le déplacement de la paroi 1 selon l'invention et la courbe II ceux de la paroi classique 1'. La paroi 1 selon l'invention présente une épaisseur e (figure 5B) égale à 80 % de l'épaisseur e' de la paroi classique. Les dimensions des éprouvettes 1 et 1' sont de 300 mm x 300 mm.

La figure 4 montre que malgré cette différence importante au niveau des épaisseurs, la paroi alvéolée selon l'invention présente une rigidité nettement supérieure (d'environ 50 %) à celle de la paroi classique. De plus, alors que la rupture de la paroi classique se produit à une pression d'environ 1,2 bars, la paroi selon l'invention résiste encore à des valeurs de 2 bars, la courbe conservant toujours une allure linéaire. Cette différence surprenante quant aux comportements des deux parois peut s'expliquer par le fait que la paroi composite selon l'invention est dépourvue de discontinuités brutales sur sa surface alors que, dans le cas de la paroi classique, les profilés en Ω produisent des discontinuités flagrantes du moment d'inertie sur la surface de la paroi.

Il ressort de ce qui précède, que les caractéristiques mécaniques d'une paroi composite selon l'invention sont nettement supérieures à celles de parois classiques. Etant donné que, pour avoir des rigidités similaires, la paroi alvéolée selon l'invention peut avoir une épaisseur beaucoup plus faible que celle d'une paroi classique, l'utilisation des parois selon l'invention, par exemple pour la réalisation de réservoirs, est très avantageuse. En effet, pour des dimensions extérieures identiques, le réservoir réalisé à partir de parois selon l'invention aura un volume utile sensiblement supérieur à celui d'un réservoir formé par des parois classiques.

Bien entendu, l'avantage des parois selon l'invention ne se limite pas à des réservoirs structuraux étanches mais est valable dans tous les domaines impliquant l'emploi de parois étanches, mécaniquement résistantes sous l'effet de fortes sollicitations mécaniques, tout en assurant un encombrement minimum. La possibilité de remplir l'espace interne de la paroi selon l'invention d'un produit approprié permet de réaliser des parois par exemple thermiquement ou accoustiquement isolantes, ininflammables ou mécaniquement renforcées. Le produit de remplissage pourrait par exemple être un matériau élastique incompressible. D'autre part, la possibilité de modifier l'arrangement des points de soudage et le degré de bombage des plaques, les parois selon l'invention sont adaptables à des conditions d'application spécifiques.

Bien entendu les plaques pourraient être réalisées en tous matériaux appropriés, métalliques ou non métalliques, et les zones de liaison pourraient être obtenues selon tout procédé approprié, par exemple, par soudure par points, ultrasons, collage, brasage, rivetage et analogue.

Il est à noter que l'assemblage des deux plaques par collage présente l'avantage que l'on obtient ainsi une véritable structure double paroi, particulièrement appropriée pour la fabrication de réservoirs nécessitant, pour satisfaire aux exigences de sécurité, deux enveloppes indépendantes. Ainsi on utilise dans des avions des réservoirs aéronautiques qui comportent une vessie interne contenant du liquide, qui est suspendue dans une enveloppe extérieure accrochée à la structure de l'avion et posée sur un plancher. L'espace entre la vessie et l'enveloppe extérieure communique avec l'extérieur pour que, en cas de crique, les fuites pouvant se produire soient évacuées vers l'extérieur. Cette structure lourde, encombrante et relativement difficile et lente à monter peut être remplacée par un réservoir dont les parois sont formées par des parois selon l'invention, à liaison par collage. En effet, dans ce cas, chaque plaque reste indépendante et une formation de criques dans la paroi interne reste limitée à celle-ci et des fuites parviennent dans l'espace entre les deux plaques dont elles pourraient être évacuées vers l'extérieur. Un autre avantage de la liaison par collage réside dans le fait que la colle est placée dans le plan médian de la paroi où les contraintes sont minimales voire presque nulles.

D'autre part, pour que les zones de liaison ne soient pas mécaniquement trop sollicitées lors de la déformation des plaques par injection d'un liquide sous pression, on enserre les zones de liaison entre deux plots presseurs 15 comme cela est indiqué schématiquement sur la figure 3A. Ce maintien des zones de liaison lors de la formation de la structure matelassée est utilisé de préférence aussi dans le cas de l'assemblage des plaques par soudure.

Il est encore à noter que les plaques peuvent être réalisées en des matériaux homogènes ou hétérogènes et que les lignes moyennes de distribution des points de liaison peuvent être de toute forme géométrique appropriée et souhaitée telle que circulaire ou linéaire. Concernant le gonflage, il peut être effectué à la température ambiante ou après échauffement des plaques.

## Revendications

1. Paroi (1) notamment pour structures aéronautiques telles que réservoir étanche, comprenant deux plaques (2,3) superposées qui sont reliées dans des zones de liaison (5) à des emplacements déterminés réparties sur la surface des plaques (2,3), en formant des zones de liaison discontinues (5), au moins certaines parties d'au moins une plaque (2), situées entre les zones de liaison (5) étant bombées, **caractérisée en ce que** toutes les parties d'au moins une plaque (2), située entre les zones de liaison discontinues (5) sont bombées de façon que la distance entre les deux plaques (2,3) augmente progressivement à partir d'une zone de liaison (5), en direction de chaque zone de liaison adjacente (5), à une valeur de séparation maximum au milieu entre ces paires de zones de liaison adjacentes (5), pour conférer à la paroi (1) un aspect matelassé.

2. Paroi (1) selon la revendication 1, **caractérisée en ce que** les zones de liaison (5) sont des zones de liaison par soudage, ultrasons, collage, brasage, rivetage et analogue.

3. Paroi (1) selon la revendication 2, **caractérisée en ce que** les zones de liaison (5) sont des points de liaison, avantageusement circulaires.

4. Paroi (1) selon l'une des revendications 1 ou 2, **caractérisée en ce que** les lignes moyennes de distribution des zones de liaison (5) présentent une forme quelconque notamment circulaire ou linéaire.

5. Paroi (1) selon l'une des revendications 1 à 4, **caractérisée en ce que** les bords (6) sont reliés, avantageusement pour former des bords de fixation de la paroi sur une structure de support.

6. Paroi (1) selon l'une des revendications 1 ou 5, **caractérisée en ce que** la rigidité de la paroi (1) est variable par le choix de l'arrangement des zones de liaison (5).

7. Paroi (1) selon l'une des revendications 1 à 6, **caractérisée en ce que** la rigidité de la paroi (1) est variable par le choix du degré de bombage des plaques (2, 3).

8. Paroi (1) selon l'une des revendications 1 à 7, **caractérisée en ce que** l'espace interne de la paroi (1) entre les plaques (2 et 3) est rempli d'un produit tel qu'un produit thermiquement ou accoustiquement isolant, ininflammable ou de propriétés mécaniques souhaitées.

9. Paroi (1) selon l'une des revendications 1 à 8, **caractérisée en ce que** les plaques (2,3) sont métalliques ou non métalliques.

10. Paroi (1) selon l'une des revendications 1 à 9, **caractérisée en ce que** les plaques (2,3) sont en des matériaux homogènes ou hétérogènes.

11. Paroi (1) selon l'une des revendications 1 à 10, **caractérisée en ce que** les parties entre les zones de liaison (5) des deux plaques (2, 3) sont bombées.

12. Réservoir notamment aéronautique du type comportant une première enveloppe située à l'intérieur d'une deuxième enveloppe et un espace entre les deux enveloppes, chaque enveloppe étant formée par une plaque (2,3) et les plaques (2,3) étant reliées dans des zones de liaison (5) à des emplacements déterminés réparties de façon discontinue sur la surface des plaques (2,3) et au moins certaines parties d'au moins une plaque (2) située entre deux zones de liaison (5) adjacente étant bombée, **caractérisé en ce que** toutes les parties entre les zones de liaison (5) adjacentes sont bombées de façon que la distance entre les deux plaques (2,3) augmente progressivement à partir d'une zone de liaison (5) en direction de chaque zone de liaison (5) adjacente jusqu'à une valeur maximale au milieu entre ces paires zones de liaison (5) pour conférer à la paroi (1) ainsi formée un aspect matelassé et **en ce que** l'espace entre les deux enveloppes constitue un espace continu autour des zones de liaison (5), pouvant communiquer avec l'extérieur pour l'évacuation de fuites ayant traversé l'enveloppe interne.

## Patentansprüche

1. Wand (1), insbesondere für Flugzeugbauteile, wie etwa dichte Behälter, umfassend zwei übereinander liegende Platten (2, 3), die an festgelegten Stellen in Verbindungszonen (5), die auf der Oberfläche der Platten (2, 3) verteilt sind, verbunden sind, indem sie unterbrochene Verbindungszonen (5) bilden, wobei mindestens bestimmte Teile mindestens einer Platte (2), die sich zwischen den Verbindungszonen (5) befinden, gewölbt sind, **dadurch gekennzeichnet, dass** alle Teile mindestens einer Platte (2), die sich zwischen den unterbrochenen Verbindungszonen (5) befindet, derart gewölbt sind, dass der Abstand zwischen den beiden Platten (2, 3) von einer Verbindungszone (5) ab in Richtung auf jede angrenzende Verbindungszone (5) allmählich bis auf einen Höchsttrennwert in der Mitte zwischen diesen Paaren von angrenzenden Verbindungszonen (5) zunimmt, um der Wand (1) ein gepolstertes Aussehen zu geben.

2. Wand (1) nach Anspruch 1, **dadurch gekennzeichnet, dass** die Verbindungszonen (5) Verbindungszonen durch Schweißen, Ultraschall, Kleben, Löten, Nieten und dergleichen sind.

3. Wand (1) nach Anspruch 2, **dadurch gekennzeichnet, dass** die Verbindungszonen (5) Verbindungspunkte, bevorzugt kreisförmige, sind.

4. Wand (1) nach einem der Ansprüche 1 oder 2, **dadurch gekennzeichnet, dass** die Mittellinien der Verteilung der Verbindungszonen (5) eine beliebige, insbesondere kreisförmige oder geradlinige Form aufweisen.

5. Wand (1) nach einem der Ansprüche 1 bis 4, **dadurch gekennzeichnet, dass** die Ränder (6) verbunden sind, günstigerweise um Ränder zur Befestigung der Wand an einem Trägerbauteil zu bilden.

6. Wand (1) nach einem der Ansprüche 1 oder 5, **dadurch gekennzeichnet, dass** die Steifheit der Wand (1) durch die Wahl der Anordnung der Verbindungszonen (5) veränderlich ist.

7. Wand (1) nach einem der Ansprüche 1 bis 6, **dadurch gekennzeichnet, dass** die Steifheit der Wand (1) durch die Wahl des Wölbungsgrads der Platten (2, 3) veränderlich ist.

8. Wand (1) nach einem der Ansprüche 1 bis 7, **dadurch gekennzeichnet, dass** der Innenraum der Wand (1) zwischen den Platten (2 und 3) mit einem Erzeugnis, wie etwa einem thermisch oder akustisch dämpfenden Erzeugnis, einem nicht brennbaren Erzeugnis oder einem Erzeugnis mit erwünschten mechanischen Eigenschaften, ausgefüllt ist.

9. Wand (1) nach einem der Ansprüche 1 bis 8, **dadurch gekennzeichnet, dass** die Platten (2, 3) metallisch oder nicht metallisch sind.

10. Wand (1) nach einem der Ansprüche 1 bis 9, **dadurch gekennzeichnet, dass** die Platten (2, 3) aus gleich- oder verschiedenartigen Werkstoffen bestehen.

11. Wand (1) nach einem der Ansprüche 1 bis 10, **dadurch gekennzeichnet, dass** die Teile zwischen den Verbindungszonen (5) der beiden Platten (2, 3) gewölbt sind.

12. Behälter, insbesondere Flugzeugbehälter, von der Art, die eine erste Ummantelung, die sich im Innern einer zweiten Ummantelung befindet, und einen Raum zwischen den beiden Ummantelungen umfasst, wobei jede Ummantelung von einer Platte (2, 3) gebildet wird, und wobei die Platten (2, 3) an festgelegten Stellen in Verbindungszonen (5), die diskontinuierlich auf der Oberfläche der Platten (2, 3) verteilt sind, verbunden sind, und wobei mindestens bestimmte Teile mindestens einer Platte (2), die sich zwischen zwei angrenzenden Verbindungszonen (5) befindet, gewölbt sind, **dadurch gekennzeichnet, dass** alle Teile zwischen den angrenzenden Verbindungszonen (5) derart gewölbt sind, dass der Abstand zwischen den beiden Platten (2, 3) von einer Verbindungszone (5) ab in Richtung auf jede angrenzende Verbindungszone (5) allmählich bis auf einen Höchsttrennwert in der Mitte zwischen den Paaren von Verbindungszonen (5) zunimmt, um der so gebildeten Wand (1) ein gepolstertes Aussehen zu geben, und dass der Raum zwischen den beiden Ummantelungen einen durchgehenden Raum um die Verbindungszonen (5) bildet, der mit der Außenseite in Verbindung stehen kann, um Verluste, welche die Innenummantelung durchquert haben, abzuleiten.

## Claims

1. Side wall (1) notably for aeronautical structures such as sealed reservoirs, comprising two superposed plates (2, 3) which are linked in connecting zones (5) to set sites allocated over the surface of the plates (2, 3), creating discontinuous connecting zones (5), at least some parts of at least one plate (2), located between the connecting zones (5), being dished, **characterised in that** all the parts of at least one plate (2), located between the discontinuous connecting zones (5), are dished in such a way that the distance between the two plates (2, 3) progressively increases from a connecting zone (5) in the direction of each adjacent connecting zone (5), to a maximum separation value at the centre between these pairs of adjacent connecting zones, so as to provide the side wall (1) with a lined aspect.

2. Side wall (1) set forth in claim 1, **characterised in that** the connecting zones (5) are connecting zones via welding, ultra-sound, bonding, brazing, riveting and similar.

3. Side wall (1) set forth in claim 2, **characterised in that** the connecting zones (5) are connecting points, advantageously circular.

4. Side wall (1) set forth in claim 1 or 2, **characterised in that** the average distribution lines of the connecting zones (5) have any shape notably circular or linear.

5. Side wall (1) set forth in claims 1 to 4, **characterised in that** the edges (6) are linked, advantageously so as to create the fastening edges of the side wall on a support structure.

6. Side wall (1) set forth in claims 1 to 5, **characterised in that** the stiffness of the side wall (1) is variable via the choosing of the positioning of the connecting zones (5).

7. Side wall (1) set forth in claims 1 to 6, **characterised in that** the stiffness of the side wall (1) is variable via the choosing of the level of dishing of the plates (2, 3).

8. Side wall (1) set forth in claims 1 to 7, **characterised in that** the internal gap of the side wall (1) between the plates (2 and 3) is filled with a product such as a heat or sound insulating product, non-flammable or of desired mechanical properties.

9. Side wall (1) set forth in claims 1 to 8, **characterised in that** the plates (2, 3) are metallic or non-metallic.

10. Side wall (1) set forth in claims 1 to 9, **characterised in that** the plates (2, 3) are made in homogeneous or heterogeneous materials.

11. Side wall (1) set forth in claims 1 to 10, **characterised in that** the parts between the connecting zones (5) of the two plates (2, 3) are dished.

12. Reservoir notably aeronautic of the type comprising a first shell located on the inside of a second shell and a gap between the two shells, each shell being formed by a plate (2, 3) and the plates (2, 3) being linked in the connecting zones (5) at set sites allocated discontinuously over the surface of the plates (2, 3) and at least some parts of at least one plate (2) located between two adjacent connecting zones (5) being dished, **characterised in that** all the parts between the adjacent connecting zones (5) are dished in such a way that the distance between the two plates (2, 3) progressively increases from a connecting zone (5) in the direction of each adjacent connecting zone (5) as far as a maximal value at the centre between these pairs of connecting zones (5) so as to provide the side wall (1), thus created, with a lined aspect and **in that** the gap between the two shells constitutes a continuous gap around the connecting zones (5) capable of communicating with the outside so as to evacuate any leakage having passed through the internal shell.
